Europäisches Patentamt

European Patent Office

Office européen des brevets

(11) Veröffentlichungsnummer: **0 246 547**
**A2**

(12) # EUROPÄISCHE PATENTANMELDUNG

(21) Anmeldenummer: **87106879.7**

(22) Anmeldetag: **12.05.87**

(51) Int. Cl.4: **G06G 9/00**

(30) Priorität: **22.05.86 DE 3617167**

(43) Veröffentlichungstag der Anmeldung:
**25.11.87 Patentblatt 87/48**

(84) Benannte Vertragsstaaten:
**DE FR GB**

(71) Anmelder: **Siemens Aktiengesellschaft Berlin
und München**
**Wittelsbacherplatz 2**
**D-8000 München 2(DE)**

(72) Erfinder: **Hoenig, Eckhardt, Dr.**
**Palmstrasse 1A**
**D-8520 Erlangen(DE)**
Erfinder: **Lischke, Burkhard, Prof. Dr.**
**In der Heuluss 13**
**D-8000 München 82(DE)**

(54) **Anordnung zur optischen Bildverarbeitung.**

(57) Zur elektronisch-optischen Bildwandlung sowie
zur optischen Bildverarbeitung durch räumliche Filterung ist erfindungsgemäß ein zweidimensionales
optisches Filter (10) vorgesehen, das ein mikrostrukturiertes Gitter enthält, dessen Öffnungen als Matrix
von Fenstern (20) ausgebildet und Fenster mit
elektrostatisch bewegbaren Dünnfilmverschlüssen
versehen sind. Die Steuerung der Fensteröffnungen
erfolgt durch elektrostatische Ladungen, die von einem Elektronenstrahl (12) vorgegeben werden. Diese
Matrix von Lichtventilen kann vorzugsweise verwendet werden als elektronisch-optischer Wandler sowie
als Fourierfilter in einem optischen Computer.

FIG 2

EP 0 246 547 A2

## Anordnung zur optischen Bildverarbeitung

Die Erfindung bezieht sich auf eine Anordnung zur optischen Bildverarbeitung durch räumliche Filterung.

Optische Computer können bekanntlich durch parallele Informationsverarbeitung z.B. Fourier-Transformationen mit Lichtgeschwindigkeit ausführen. In einer bekannten Ausführungsform einer optischen Bildverarbeitung ist als Absorptionsfilter mit zweidimensional steuerbarer Absorption eine Multilagen-Struktur mit einem Flüssigkristall vorgesehen. Da bei diesem Filter die ortsabhängige Absorption optisch eingeschrieben werden muß, erfordert die Verarbeitung elektronisch vorliegender Bildinformation eine zusätzliche Umwandlung. Außerdem ist in dieser Ausführungsform eine Bildverarbeitung mit kohärentem Licht nicht möglich, da bei dieser Multilagenstruktur Phasenfehler nicht ausgeschlossen sind (US-Patent 4 351 589).

Der Erfindung liegt die Aufgabe zugrunde, ein elektronisch steuerbares Filter anzugeben, das einerseits als Eingangswandler in einem optischen Rechner eine elektronische Bildinformation in eine optische Bindinformation umwandeln kann und andererseits als Filter, beispielsweise als Fourierfilter, in einem System zur optischen Bildverarbeitung eingesetzt werden kann mit der Möglichkeit, für ein gegebenes Bild verschiedene Filterfunktionen in einem Suchprozeß schnell durchzuvariieren, um beispielsweise Strukturen im Bild zu erkennen, zu verstärken oder zu korrigieren. Es soll beispielsweise eine Raumfrequenz, die einer Zeileninformation zugeordnet ist, herausgefiltert werden.

Diese Aufgabe wird erfindungsgemäß gelöst mit den kennzeichnenden Merkmalen des Anspruchs 1. Man erhält ein durch den Elektronenstrahl adressierbares und analog steuerbares zweidimensionales optisches Lichtventil-Array. Es ist vorzugsweise geeignet als Wandler einer elektronischen Bildinformation in eine optische Bildinformation sowie als Fourier-Filter und durch Kombination der beiden Funktionen als optischer Rechner.

Das mit der Erfindung vorgeschlagene Filter enthält einen Träger, der mit einer mikrostrukturierten Matrix von Fensteröffnungen versehen ist, deren Dünnfilmverschlüsse aus Metallfilmen bestehen, die mit dem Rand der Fensteröffnungen elektrisch isolierend verbunden und freitragend über der Fensteröffnung angeordnet sind. Diese Dünnfilmverschlüsse sind durch elektrostatische Aufladung in Richtung der Filmnormalen bewegbar. Die elektrostatische Ladung liefert der Elektronenstrahl, mit dem somit die Größe der Fensteröffnungen steuerbar ist. Durch die Wahl der Energie der Elektronen wird erreicht, daß sich der entsprechende Dünnfilmverschluß entweder auf- oder ablädt. Das analoge stetige Maß der Aufladung wird durch die Energie und Intensität der Elektronen festgelegt.

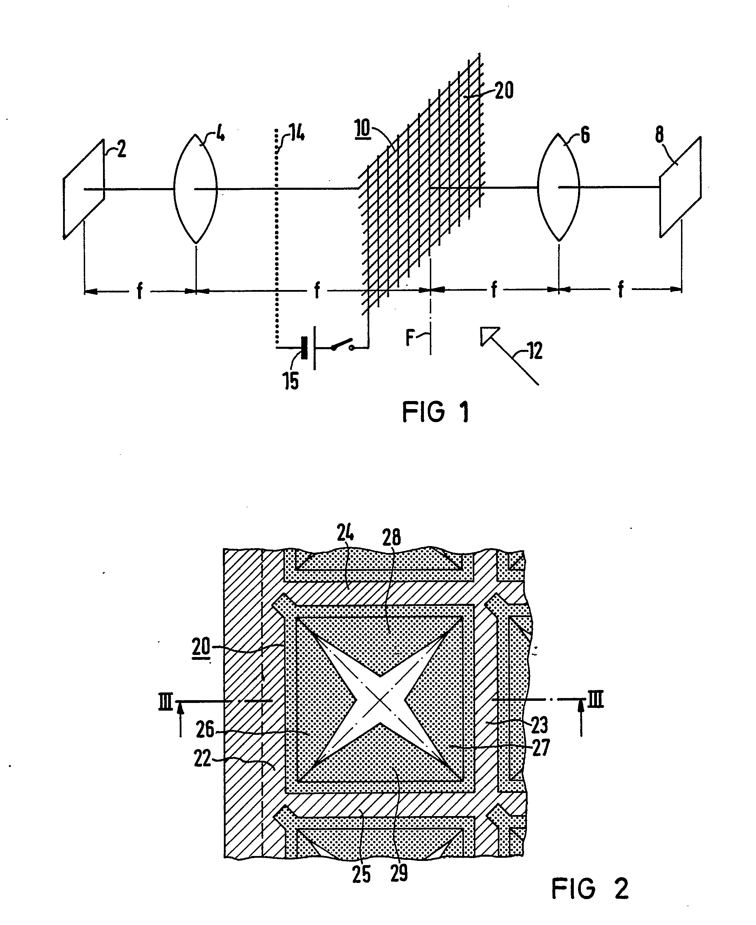

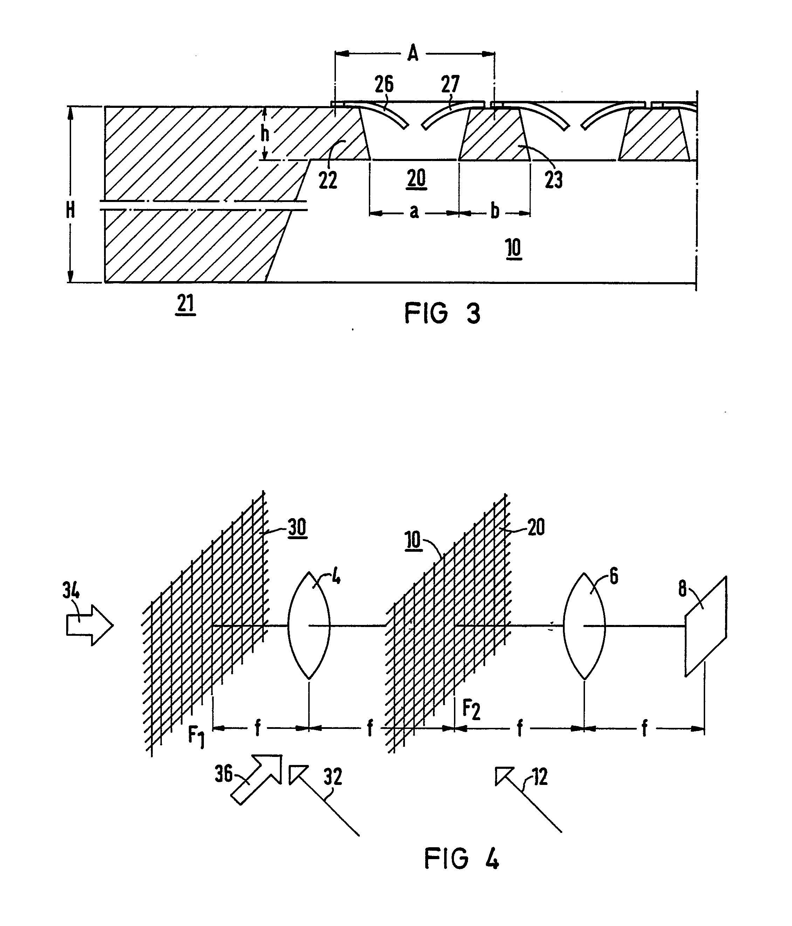

Zur weiteren Erläuterung der Erfindung wird auf die Zeichnung Bezug genommen, in deren Figur 1 die Anwendung eines elektronisch steuerbaren, zweidimensionalen, optischen Filters gemäß der Erfindung als Fourierfilter für einen optischen Computer schematisch veranschaulicht ist. In Figur 2 ist der Aufbau des mikrostrukturierten Gitters mit elektrostatisch bewegten Dünnfilmverschlüssen dargestellt. Figur 3 zeigt einen Querschnitt durch einen Teil des Gitters gemäß Figur 2. In Figur 4 ist ein steuerbares Fourierhologramm für einen optischen Computer mit einem vorgeschalteten optischen Filter gemäß der Erfindung schematisch veranschaulicht.

Die Ausführungsform einer Anordnung zur optischen Bildverarbeitung durch räumliche Filterung gemäß Figur 1 enthält eine bezüglich Raumfrequenzen zu filternde optische Objektstruktur 2, beispielsweise die Bildebene eines kohärenten optischen Abbildungssystems oder eine kohärent beleuchtete Photoplatte mit Bildinformation, ferner zwei Linsen 4 und 6 mit der Brennweite f, ein Lichtventil-Array 10 sowie ein Detektor-Array 8 für die gefilterte Struktur jeweils in Fourieranordnung. In dieser Anordnung zur optischen Bildverarbeitung erscheint in der Fourier-Ebene F instantan die Fourier-Transformation der Objektstruktur 2. Die Steuerinformation wird mit einem Elektronenstrahl 12 auf das Filter 10 übertragen. Der Elektronenstrahl 12 steuert ortsabhängig die Transparenz des Filters 10. In der Detektorebene erscheint instantan, d.h. mit Lichtgeschwindigkeit, die bezüglich ausgewählter Raumfrequenzen gefilterte Struktur.

Als elektrostatische Referenzelektrode für die Matrix von Fensteröffnungen kann ein in der unmittelbaren Umgebung angebrachtes, den optischen Strahlengang nicht störendes Hilfsgitter 14 dienen, dem eine Spannungsquelle 15 zugeordnet ist.

Das vorzugsweise als Fourier-Filter mit analogem, wahlfreiem Zugriff (random access) in der Fourierebene F anwendbare Filter 10 enthält als mikrostrukturiertes Gitter mit elektrostatisch bewegten metallischen Dünnfilmverschlüssen einen Träger mit einer Matrix von Fenstern 20, die jeweils durch Stege voneinander getrennt sind.

Die metallischen Dünnfilmverschlüsse der Fenster 20 bestehen gemäß Figur 2 aus Metallfilmen 26 bis 29, die vorzugsweise aus Gold oder auch aus Titan bestehen können und mit den Stegen 22 bis 25 elektrisch isolierend verbunden sind und jeweils freitragend über der Öffnung der Fenster 20 angeordnet sind. Ein elektronisch kontrollierter Elektronenstrahl 12 steuert die elektrostatische Aufladung dieser Metallfilme 26 bis 29 und damit die Öffnung der Fenster 20 aus ihrer geschlossenen Stellung, die in der Figur strichpunktiert angedeutet ist.

Im Schnitt durch einen Teil des Filters 10 mit einem der Fenster 20 gemäß Figur 3 sind die Metallfilme 26 und 27 über dem Fenster 20 in etwas geöffneter Lage angedeutet. Mit einem mittleren Abstand A der Stege 22 und 23 von beispielsweise etwa 10 μm und einem inneren Abstand a der Stege 22 und 23 von beispielsweise etwa 5 μm sowie einer Breite b der Stege 23 von beispielsweise etwa 4 μm sowie einer Höhe h der Stege 22 und 23 von beispielsweise etwa 3 μm kann ein Gitter 10 mit beispielsweise etwa $10^6$ Öffnungen/cm² realisiert werden.

Der äußere Randbereich des Trägers 21, der vorzugsweise aus Silizium oder auch aus Bornitrid bestehen kann, ist aus Gründen der Stabilität wesentlich verstärkt; seine Höhe H kann vorzugsweise mehrere 100 μm, insbesondere etwa 400 μm betragen. Die elektrostatische Ladung der Metallfilme 26 und 27 bestimmt ihre Durchbiegung und damit die Größe der Fensteröffnungen. Die erforderliche Kraft zum Öffnen der Fenster 20 erhält man durch die Gegenladung vom Hilfsgitter 14. Eine rücktreibende Kraft der Metallfilme 26 und 27 zum Schließen der Fenster 20 ergibt sich aus der Federwirkung der Metallfilme, sowie durch eine Aufladung mit umgekehrtem Vorzeichen.

Damit eine ausreichende Durchbiegung der Metallfilme 26 und 27 bei gegebener Ladung möglich ist, darf die Dicke der Metallfilme einerseits einen vorbestimmten Wert von beispielsweise etwa 0,1 μm nicht wesentlich überschreiten. Ihre Dicke muß jedoch andererseits so groß sein, daß eine ausreichende rücktreibende Kraft zum Schließen der Fenster 20 entsteht; ihre Dicke sollte deshalb mindestens 0,01 μm betragen. Eine ausreichende Beweglichkeit der Metallfilme 26 und 27 erhält man mit einer Dicke von vorzugsweise etwa 0,1 μm. Damit ein Abfließen der Ladungen verhindert wird, sind die Metallfilme 26 und 27 gegenüber den Stegen 22 und 23 elektrisch isoliert. Als elektrische Isolation kann beispielsweise eine in der Figur nicht dargestellte Oberflächenschicht der Stege 22 und 23 dienen. In Verbindung mit einem Träger 21 aus Silizium kann der den Metallfilmen 26 und 27 zugewandte Oberflächenbereich der Stege 22 und 23 beispielsweise mit einer Auflage aus Siliziumoxid oder Siliziumdioxid versehen sein.

Zum Herstellen des Trägers 21 kann beispielsweise ein Verfahren verwendet werden, das im wesentlichen zur Herstellung von Röntgenmasken bekannt ist. Der Träger kann beispielsweise aus einer Platte mit der Dicke der Höhe H hergestellt werden, indem das Material auf der Unterseite bis auf den verstärkten Randbereich durch Dünnätzen abgetragen wird. Dabei kann eine dotierte Oberflächenschicht mit der Höhe h durch entsprechende Dotierung als Ätzstopp dienen. Aus dieser verdünnten Schicht werden dann die Öffnungen der Fenster 20 ebenfalls durch Ätzen herausgearbeitet.

Die Metallfilme 26 bis 29 können beispielsweise zunächst als gemeinsame Metallschicht auf den Träger 21 aufgebracht werden, bevor die Öffnungen der Fenster 20 aus dem Träger herausgearbeitet worden sind. Anschließend werden dann die Öffnungen der Fenster 20 aus der dünngeätzten Schicht herausgearbeitet, so daß die Stege 22, 23 entstehen und dann werden die Metallfilme der einander benachbarten Fenster auf den Stegen 22 und 23 aufgetrennt und anschließend oder gegebenenfalls zugleich die jeweils zu einem der Fenster 20 gehörenden Metallfilme durch Trockenätzung aufgetrennt.

Durch Amorphisieren der Metallfilme läßt sich eine vertretbare Standzeit der Membran erreichen.

In der besonderen Ausführungsform einer Anordnung gemäß Figur 4 wird das ein Lichtventil-Array bildende Filter 10 sowohl zur Wandlung einer elektronisch vorliegenden zweidimensionalen Information in eine zweidimensionale optische Struktur als auch deren Filterung bezüglich Raumfrequenzen verwirklicht. Verbunden mit einem elektronischen Detektor-Array 8 und einem elektronischen Rechner zur rückgekoppelten Registrierung und Steuerung wird ein elektronisch gesteuerter optischer Parallelrechner realisiert.

Die Ausführungsform gemäß Figur 4 unterscheidet sich gegenüber der Ausführungsform gemäß Figur 1 lediglich dadurch, daß in Figur 4 die zu filternde optische Struktur durch ein kohärent beleuchtetes Lichtventil-Array 30 erzeugt wird. Durch die Anordnung dieses zusätzlichen Lichtventil-Arrays 30 wird ein vollständig elektronisch steuerbares Fourierfilter mit zweidimensionaler Amplitudenmodulation ohne jede Phasenmodulation realisiert. In dieser Ausführungsform können sowohl die darzustellende Urstruktur als auch die Filterstruktur elektronisch variiert werden. Als Resultat entsteht wieder ein elektronisches Bild. Ein besonderer Vorteil besteht darin, daß dieser optische Computer nicht wie ein Digitalrechner den Algorithmus für jedes Bildelement mit den benachbarten Bildelementen verknüpfen muß und die Fourier-Transformation nicht Stück für Stück aus dem gesamten Netzwerk der Matrix berechnen muß.

**Ansprüche**

1. Anordnung zur optischen Bildverarbeitung durch räumliche Filterung, insbesondere zur Wandlung einer elektronischen Bildinformation in eine optische Bildinformation sowie zur Fourier-Transformation, **gekennzeichnet** durch ein zweidimensionales optisches Filter (10), das ein mikrostrukturiertes Gitter enthält, dessen Fenster (20) mit elektrostatisch bewegbaren Dünnfilmverschlüssen versehen sind, und durch einen Elektronenstrahl (12) zur Steuerung der Fensteröffnungen.

2. Anordnung nach Anspruch 1, **dadurch gekennzeichnet,** daß das Gitter einen Träger (21) enthält, der mit einer mikrostrukturierten Matrix von Fensteröffnungen versehen ist, deren Dünnfilmverschlüsse aus Metallfilmen (26 bis 29) bestehen, die mit Stegen (22 bis 25) der Fenster (20) elektrisch isolierend verbunden und freitragend über der Öffnung der Fenster (20) angeordnet sind und durch elektrostatische Aufladung in Richtung der Filmnormalen bewegbar sind.

3. Anordnung nach Anspruch 2, **gekennzeichnet** durch amorphe Metallfilme.

4. Anordnung nach einem der Ansprüche 1 bis 3, **dadurch gekennzeichnet,** daß dem Filter (10) ein elektrostatisches Hilfsgitter (14) zur Steuerung der Gesamtöffnung der Fenster (20) zugeordnet ist.

FIG 1

FIG 2

FIG 3

FIG 4